# EUROPÄISCHE PATENTSCHRIFT

(11) **EP 2 015 661 B1**
(45) Veröffentlichungstag und Bekanntmachung des Hinweises auf die Patenterteilung: **22.09.2010**
(21) Anmeldenummer: 07720115.0
(22) Anmeldetag: 03.05.2007
(51) Int. Cl.: A47J 43/10

(54) **GERÄT ZUM BEARBEITEN VON LEBENSMITTELN**
DEVICE FOR PROCESSING FOODSTUFFS
DISPOSITIF DE TRAITEMENT D'ALIMENTS

(30) Priorität: 04.05.2006 CH 730062006; 22.01.2007 CH 89072007
(43) Veröffentlichungstag der Anmeldung: 21.01.2009
(73) Patentinhaber: SwizzzPROZZZ AG, 6375 Beckenried (CH)
(72) Erfinder: HERREN, Bruno, 6052 Hergiswil (CH)
(74) Vertreter: Rentsch & Partner
(86) Internationale Anmeldenummer: PCT/CH2007/000218
(87) Internationale Veröffentlichungsnummer: WO 2007/128154

(56) Entgegenhaltungen:
- WO-A-03/043477
- WO-A-2004/073474
- WO-A-2005/115209

## Beschreibung

### FELD DER ERFINDUNG

Zum Zerkleinern von Lebensmitteln, insbesondere zum Hacken von Zwiebeln sind zum Beispiel aus der US 6,467,711 oder der EP-B-0 345 223 Hacker bekannt, die ein über das zu zerkleinernde Gut stülpbares Gehäuse und ein in dem Gehäuse geführtes, mittels eines Betätigungsmechanismus mit einem Druckknopf und einem Stössel gegen die Kraft einer Feder, verschiebbares Messer aufweisen. Das Messer lässt sich gegen die Kraft der Feder nach unten verschieben und wird bei der nachfolgenden Bewegung nach oben durch eine Führung im Gehäuse um einen bestimmten Winkel relativ zum Gehäuse verdreht. Ein zwischen Betätigungsmechanismus und Gehäuse angeordneter Fortschaltmechanismus stellt sicher, dass eine zwangsläufige Fortschaltung des Messers gewährleistet ist. Diese Zwangsfortschaltung hat sich als sehr vorteilhaft erwiesen, da sie ein "auf der Stelle Hacken" des Messers verhindert. Dadurch wird die Effektivität des Hackers erhöht und die gleichmässige Grössenverteilung des Hackgutes verbessert. Die Geräte sind weit verbreitet, weisen jedoch einige Nachteile auf. So muss zum Beispiel mit viel Kraft auf den Druckknopf geschlagen werden um hartes Gemüse hacken zu können. Faserige Gemüse wie Fenchel oder Lauch lassen sich nur schlecht oder gar nicht hacken und bei feinem Schneidgut wie Kräutern sind die Ergebnisse eher unbefriedigend.

Seit Jahren sind Geräte mit Kurbelantrieb zum Bearbeiten von Gemüse, wie zum Beispiel das Gerät aus der US 6,035,771, bekannt, bei denen zwei in entgegengesetzten Richtungen rechtwinklig abstehende Klingen auf einer zentralen Welle angeordnet sind, die senkrecht in einen annähernd kreiszylindrischen Schneidgutbehälter ragt. Die Klingen sind jeweils nur an der Vorderkante mit einer Schneide versehen, so dass die Kurbel stets im Uhrzeigersinn gedreht werden muss. Die Kurbel greift an einer Antriebsachse an, die exzentrisch zur zentralen Welle angeordnet ist. Die Drehbewegung der kurbelbetriebenen Antriebsachse wird über ein erstes aussenverzahntes Zahnrad auf ein zweites Zahnrad der zentralen messertragenden Welle übersetzt. Um eine höhere Drehzahl der Welle zu erreichen wird gemäss einer Ausführungsform mittels zweier weiterer Getrieberäder nochmals übersetzt. Diese doppelte Übersetzung erhöht nicht nur die Kosten in der Produktion, sondern sie macht das Gerät auch lauter und anfälliger für Fehlfunktionen.

Aus der WO 2004/073474 ist ein kleines annähernd zylindrisches, manuell betriebenes Gerät bekannt, das zum Gebrauch in den Händen gehalten wird. Durch wiederholtes Verdrehen eines kreisrunden Antriebteils gegen den koaxial angeordneten Behälter mit dem Schneidgut wird eine zentrale, auf der gemeinsamen Mittelachse angeordnete, Welle mit zwei in entgegen gesetzten Richtungen rechtwinklig abstehenden Klingen angetrieben. Da das Gerät zum Gebrauch annähernd vollständig von den Händen des Benutzers umschlossen werden muss, ist die Baugrösse äusserst beschränkt. Zum Befüllen muss das Schneidgut - z. B. eine Zwiebel - geviertelt werden, da es sonst im Schneidgutbehälter keinen Platz hat. Um ein befriedigendes Schneidergebnis zu erzielen, muss der Antriebsteil 40 bis 60 mal relativ zu den übrigen Teilen des Geräts in abwechselnd entgegengesetzte Drehbewegungen versetzt werden. Die Drehbewegung vom Antriebsteil gegenüber dem Behälter wird übersetzt auf die Welle mit den Messern übertragen. Da die Klingen beidseitig mit Schneiden versehen sind, lässt sich durch gezielte Umkehr des Drehsinns der Welle in beiden Drehrichtungen schneiden. Das Gerät hat den zusätzlichen Nachteil, dass bei der Befüllung mit hartem oder zäh-faserigem Schneidgut - bedingt durch die Übersetzung der Drehbewegung - der Antriebsteil mit viel Kraft gegen den Behälter verdreht werden muss. Da die Nutzer gerade beim Kochen oft nasse oder fettige Hände haben, lässt sich das Gerät in einer solchen Situation nicht sicher halten, oder der Nutzer rutscht ab und kann die zum Schneiden nötige Kraft nicht aufbringen. Für den Fachmann ist offensichtlich, dass die Herstellung und Montage des Planetengetriebes sehr aufwändig ist.

Aus der EP 1 385 409 ist ein weiteres kleines Handgerät bekannt, bei dem eine messertragende Welle direkt auf die angetriebene Achse aufgesteckt werden kann. Die Welle ist mit vier radial abstehenden, annähernd rechtwinklig zueinander angeordneten, Klingen versehen. Der Antrieb der Welle erfolgt über einen Schnurzug, wobei die Schnurzug-Haspel koaxial auf der angetriebenen Achse sitzt und damit auch koaxial zur messertragenden Welle angeordnet ist. Beim Betrieb wird das Gerät in der einen Hand frei gehalten und mit der anderen Hand muss am Schnurzug gezogen werden. Es lässt sich wiederum nur wenig Schneidgut, das vorgängig noch zerkleinert werden muss, zwischen die Klingen und unter die frei in den Schneidgutbehälter ragende messertragende Welle einfüllen. Wird zu viel oder zu grosses Schneidgut in den Schneidgutbehälter gefüllt, so kann es beim Ziehen am Schnurzug zum Blockieren des Gerätes kommen, da alle vier Klingen gleichzeitig einschneiden. Durch die Wahl einer Haspel mit grossem Durchmesser wird zwar die Hebelwirkung erhöht, aber gleichzeitig die erreichbare maximale Drehzahl verringert.

Ein weiteres Gerät ist aus der WO2005/115 209A bekannt.

### HINTERGRUND DER ERFINDUNG

Der Erfindung liegt die Aufgabe zu Grunde, ein gattungsgemässes Gerät zur Verfügung zu stellen, das die oben genannten Nachteile nicht aufweist. Es ist eine weitere Aufgabe, einen manuellen Antriebsmechanismus zur Verfügung zu stellen, der es dem Benutzer bequem erlaubt, genügend Kraft auf die Messer zu übertragen und gleichzeitig eine hohe Drehzahl, respektive eine hohe Schnittgeschwindigkeit zu erreichen, um auch grössere Mengen von schwierigem Schneidgut, zum Beispiel hartes, faseriges und/oder nasses Gut, problemlos verarbeiten zu können. Ausserdem sollen Herstellung und Montage des Gerätes kostengünstig sein, und das Gerät soll sich ausser zum Schneiden oder Hacken für weitere Bearbeitungsschritte von Nahrungsmittel einsetzen lassen und generell mit wenig Kraftaufwand einfach, sicher und bequem zu bedienen und zu reinigen sein.

Diese Aufgabe wird durch ein Gerät mit den Merkmalen des Anspruchs 1 erfüllt.

Ein Gerät zum Bearbeiten von Lebensmitteln besteht im Wesentlichen aus einem Oberteil, einem Antriebsmechanismus und einem Unterteil mit Arbeitsbehälter und einer mittels dem Antriebsmechanismus manuell antreibbaren und in eine Drehbewegung versetzbaren Arbeitseinheit. Der Antriebsmechanismus kann mit einem Schnurzugantrieb betätigt werden und der Antriebsmechanismus und die Arbeitseinheit stehen über eine lösbare drehmomentschlüssige Verbindung in Wirkverbindung. Der Antriebsmechanismus umfasst im Wesentlichen eine primäre und eine sekundäre Antriebseinheit, die über ein Getriebe derart in Wirkverbindung stehen, dass ein Übersetzungsverhältnis, vorzugsweise von 1:1.5 bis 1:4, besonders bevorzugt zwischen 1:1.8 bis 1:1.9 erreicht wird. In einer Ausführungsform sind die primäre und die sekundäre Antriebseinheit achsparallel.zueinander angeordnet. Weiter möglich ist, dass die sekundäre Antriebseinheit koaxial zur einer Zentralachse des Gerätes und eine Antriebsachse der primären Antriebseinheit exzentrisch dazu angeordnet ist. Weiter kann die zumindest eine der Antriebseinheiten die Achse der jeweils anderen Antriebseinheit schneiden. In einer weiteren Ausführungsform umfasst die primären Antriebseinheit koaxial angeordnet Federgehäuse, Haspel und Treibrad und die sekundäre Antriebseinheit umfasst koaxial angeordnet Axialzapfen, Rotorscheibe und Lagerbuchse. In einer besonderen Ausführungsform steht die primäre Antriebseinheit über eine Innenverzahnung des Treibrads mit einer Aussenverzahnung des Axialzapfens der sekundären Antriebseinheit in Wirkverbindung. Eine Möglichkeit besteht darin, dass ein an einer Deckelunterseite frei nach unten ragender Lagerzapfen die primäre Antriebseinheit trägt. Weiter kann die primäre Antriebseinheit annähernd waagerecht im Oberteil angeordnet und gegen die Deckelinnenwand in dieser Stellung abgestützt sein. In einer bevorzugten Ausführungsform weist der Axialzapfen und die Rotorscheibe eine zentrale unterseitige, sechseckige Aufnahme für die drehmomentschlüssige Aufnahme eines axial verschiebbaren oberen Kupplungsteils auf, der aus einer oberen Freilaufposition in eine untere drehmomentschlüssige Eingriffposition mit einem unteren Mitnehmer zur Übertragung der Drehbewegung des Antriebsmechanismus auf die Arbeitseinheit bringbar ist. In einer weiteren Ausführungsform ist der Arbeitsbehälter ein im Wesentlichen rotationssymmetrisches Gefäss zur Aufnahme von zu bearbeitendem Gut, in dem die Arbeitseinheit im Wesentlichen koaxial drehbar gelagert ist, wobei die Arbeitsmittel vorzugsweise radial zur Zentralachse angeordnet sind. In einer bevorzugten Ausführungsform stützt ein Stützelement die primäre Antriebseinheit ab, und nimmt die durch den Schwung auf die Haspel und den Lagerzapfen eingelenkte Auslenkkraft zumindest teilweise auf.

### KURZBESCHREIBUNG DER FIGUREN

Anhand von Figuren, welche lediglich Ausführungsbeispiele darstellen, wird die Erfindung im Folgenden erläutert. Es zeigen
- Fig. 1: einen Längsschnitt entlang der Zentralachse durch das Gerät gemäss einer ersten Ausführungsform, wobei eine Schneideinheit nicht im Schnitt dargestellt ist;
- Fig. 2: einen Schnitt durch einen Oberteil eines Gerätes gemäss Figur 1;
- Fig. 3: eine Detailvergrösserung ausgewählter Teile des Antriebsmechanismus im einge- bauten Zustand im Oberteil gemäss Figur 2;
- Fig. 4: eine Detailvergrösserung ausgewählter Teile des Antriebsmechanismus gemäss Figur 3 im auseinander gebauten Zustand, wobei diese in Axialrichtung ausein- ander geschoben sind;
- Fig. 5: eine Seitenansicht auf eine Generatoreinheit eingebaut in einen Oberteil gemäss Figur 1 im Längsschnitt;
- Fig. 6: eine Ansicht von oben auf einen Deckel eines Gerätes gemäss Figur 1;
- Fig. 7a: einen Längsschnitt durch eine Kupplung mit einsinnigem Freilauf zwischen einer sekundären Antriebseinheit und einer Basis;
- Fig. 7b: eine Ansicht von unten auf einen oberen Kupplungsteil in Richtung B, gemäss Figur 7a;
- Fig. 7c: eine Ansicht von oben auf einen Mitnehmer einer Kupplung gemäss Figur 7a in Blickrichtung A;
- Fig. 8: einen Schnitt durch einen Oberteil eines Gerätes gemäss einer weiteren Ausfüh- rungsform;
- Fig. 9a: einen Schnitt durch ein Stützelement gemäss der Ausführungsform aus Figur 8;
- Fig. 9b: eine Ansicht von unten auf das Stützelement gemäss Figur 9a; und
- Fig. 9c: eine Draufsicht auf das Stützelement gemäss Figur 9a.

### DETAILLIERTE BESCHREIBUNG BEVORZUGTER AUSFÜHRUNGSFORMEN

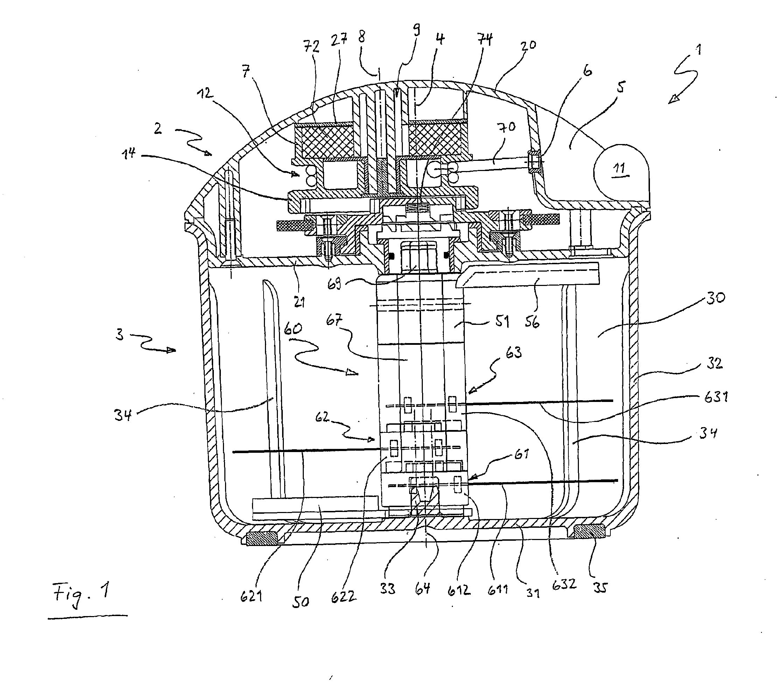

In der Figur 1 ist eine erste Ausführungsform des erfindungsgemässen Gerätes 1 zum Bearbeiten von Nahrungsmitteln im axialen Längsschnitt dargestellt, wobei eine Schneideinheit 60 nicht im Schnitt gezeigt ist. Das Gerät 1 ist im Wesentlichen rotationssymmetrisch um eine Zentralachse 4 ausgebildet und weist einen Oberteil 2 auf, der eine kreisrunde, im Wesentlichen plane, Basis 21 mit einem aufgesetzten gewölbten Deckel 20 umfasst. Zwischen Deckel 20 und Basis 21 sind wesentliche Anteile eines Antriebsmechanismus 10 untergebracht. Der Oberteil 2 lässt sich form- und/oder kraftschlüssig auf einen Unterteil 3 aufsetzen, der im vorliegenden Beispiel einen kreisrunden schüsselförmigen Schneidgutbehälter 30 umfasst. Der Schneidgutbehälter 30 ist vorzugsweise aus einem transparenten oder halbtransparenten lebensmittelzulässigen Kunststoffmaterial gefertigt und umfasst einen Boden 31 mit einem zentralen nach oben gerichteten Lagerzapfen 33 und eine Seitenwand 32 mit einer Mehrzahl von vertikalen gleichmässig über den Umfang verteilten Verwirbelungsrippen 34. Die Schneideinheit 60 ist an einer Unterseite mit einer zentralen Lageröffnung versehen, mit der sie sich auf den Lagerzapfen 33 im Schneidgutbehälter 30 stecken lässt. Die Schneideinheit 60 gemäss der dargestellten Ausführungsform wird im Wesentlichen von einer Messerwelle 67 gebildet, von der drei Messer 61, 62, 63 und zwei Abweiser 50, 51 als Wirkmittel radial abstehen. Ein oberseitiger Antriebsnocken 69, im dargestellten Ausführungsbeispiel ein Nocken mit Aussensechskant, der Schneideinheit 60 greift formschlüssig in eine korrespondierende Aufnahme 71 eines Mitnehmers 23 des Antriebsmechanismus 10 ein, so dass sich das Drehmoment vom Mitnehmer 23 des Antriebsmechanismus 10 auf die Schneideinheit 60 übertragen lässt. Der Mitnehmer 23 ist im Zentrum der Basis 21 drehbar, aber axial nicht verschiebbar, reibungsarm und gegen die Basis 21 abgedichtet, gelagert. Die Messerwelle 67 mit den Wirkmitteln 50, 51, 61, 62, 63 ist auf diese Weise an Ober- und Unterseite sicher gelagert und kann die beim Betrieb in die Wirkmittel, im vorliegenden Beispiel in die Messer 61, 62, 63 und die Abweiser 50, 51, eingeleiteten Kräfte auch bei hohen Drehzahlen problemlos aufnehmen, ohne aus ihrer axialen Position gelenkt zu werden.

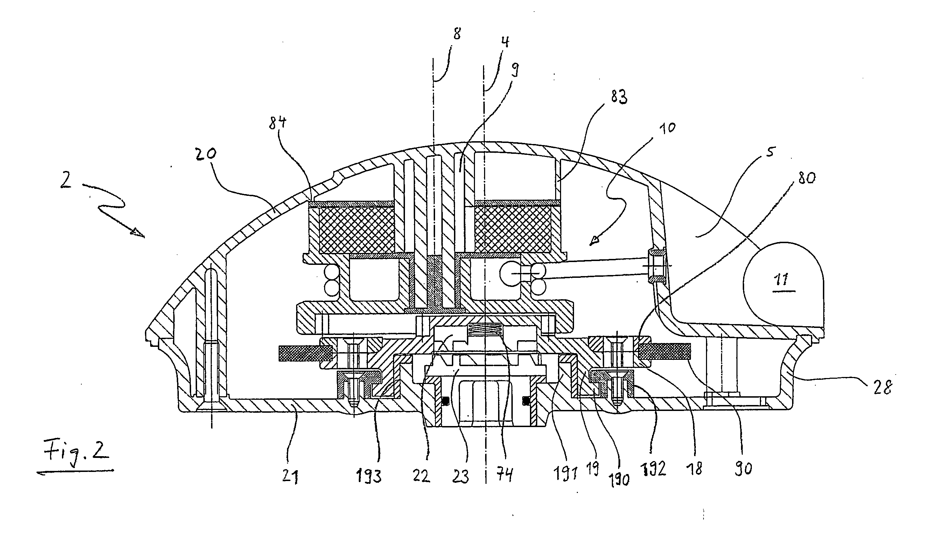

Die Drehbewegung der Wirkmittel wird gemäss der vorliegenden Erfindung mit einem Schnurzugmechanismus erzeugt. Wie in den **Figuren 1** **und** **2** dargestellt ist, kommt der Handgriff 11 bei aufgewickelter Zugschnur 70 in einer Aussparung 5 am Deckel 20 zu liegen. Die an ihm befestigte Zugschnur 70 ist durch eine Durchführöffnung 6 im Deckel 20 reibungsarm einer im Inneren des Oberteils 2 angebrachten Haspel oder Schnurrolle 12 zugeführt und auf dieser aufgerollt. Konzentrisch über der Haspel 12 ist ein Federgehäuse 7 auf einem vom Deckel 20 nach unten stehenden Lagerzapfen 9 angeordnet. Die Länge der Zugschnur 70 ist mit 400 bis 750 mm, vorzugsweise 600 mm, so gewählt dass sich bei einem entsprechenden Durchmesser der Haspel 12 pro Zug an der Zugschnur 70 (bis zu deren vollständiger Abwicklung) die Haspel 12 3- bis 6-mal, vorzugsweise 4- bis 5-mal vollumfänglich dreht. Im Ausführungsbeispiel der **Figuren 1 bis 4** ist ein Gerät 1 mit einem Antriebsmechanismus 10 mit Übersetzung dargestellt, bei dem die Antriebsachse 8 exzentrisch an der Deckelinnenseite angeordnet ist.

Die Haspel 12 ist vorzugsweise einstückig mit dem darüber liegenden Federgehäuse 7 und einem darunter liegenden Hohlrad, auch Treibrad 14 genannt, gefertigt und bildet im Wesentlichen eine primäre Antriebseinheit 101. Das exzentrisch zur Zentralachse 4 angeordnete Treibrad 14 ist nach unten offen und mit einer Innenverzahnung 15 versehen. Die Innenverzahnung 15 ist in den **Figuren 1 bis 4** jeweils nur angedeutet. Sie steht mit einer Aussenverzahnung 16 eines konzentrisch zur Zentralachse 4 im Oberteil 2 gelagerten Axialzapfens 17 in Wirkverbindung. Im dargestellten Ausführungsbeispiel beträgt die Übersetzung 1:1.8, wobei sich eine Übersetzung von 1:1.5 bis zu 1:4 als vorteilhaft erwiesen hat.

Der Axialzapfen 17 ist Teil einer sekundären Antriebseinheit 102 die Axialzapfen 17, Rotorscheibe 18 und Lagerbuchse 19 umfasst und dessen Drehachse mit der Zentralachse 4 des Gerätes 1 zusammenfällt. Der Axialzapfen 17 sitzt konzentrisch auf einer Rotorscheibe 18, die Klemmmittel zur Aufnahme eines Magnetrings 90 aufweist. Die Klemmmittel umfassen im dargestellten Ausführungsbeispiel eine periphere Nut. Ein innerer Bereich des Magnetrings 90 wird mittels einem Spannring 80 klemmend in der peripheren Nut der Rotorscheibe 18 gehalten, so dass der grössere Teil des Magnetringdurchmessers in Radialrichtung frei nach aussen ragt. Auf die Funktion des Magnetrings 90 wird im Weiteren noch genauer eingegangen.

Von der Unterseite der Rotorscheibe 18 ragt eine zylindrische Lagerbuchse 19 nach unten, die mit einem unteren, aussen umlaufenden Flansch 190 versehen ist. Mit der Lagerbuchse 19 sitzt die sekundäre Antriebseinheit 102 auf einem Achszylinder 191 der Basis 21. Eine Mehrzahl von um den äusseren Umfang der Lagerbuchse 19 verteilte und mit der Basis 21 verschraubte Niederhalter 192 hintergreifen den Flansch 190 und stellen sicher, dass sich die sekundäre Antriebseinheit 102 in Axialrichtung nicht vom Achszylinder 191 lösen kann, ohne seine Drehbarkeit zu behindern. Auf dem Achszylinder 191 ist, wie in den Figuren 1 und 2 dargestellt, vorzugsweise eine Lagerhülse 193 aufgepresst, oder aufgeklebt, die der Konstruktion mehr Stabilität verleiht und den Abrieb minimiert. Gleichermassen sind stark beanspruchte Bereiche der Antriebsachse 8 und der zentralen Lageröffnung der Basis 21 des Oberteils 2 mit entsprechenden Lagerhülsen versehen.

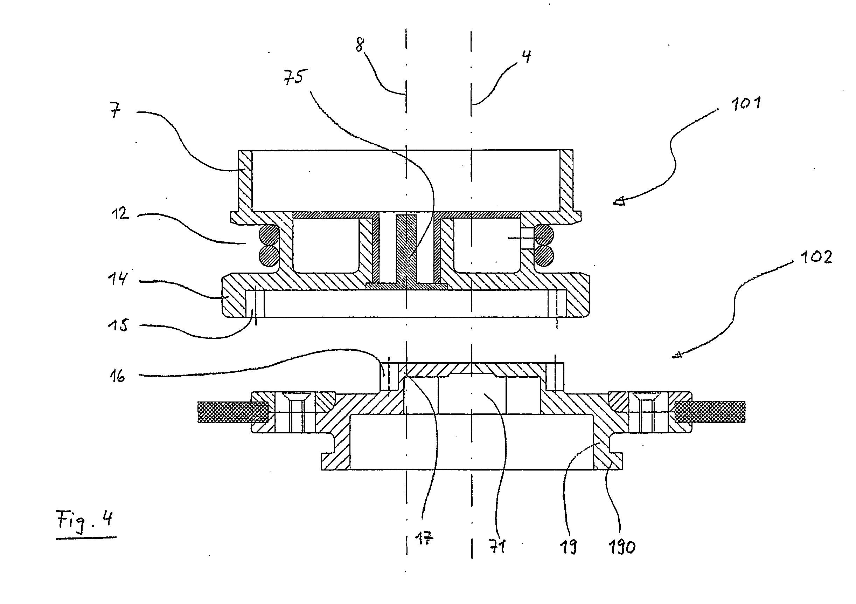

Aus den Ansichten der **Figuren 1 bis 4** geht deutlich hervor, dass die Antriebseinheiten 101, 102 nicht über eine gemeinsame durchgehende Achse verfügen. Die Drehachsen der beiden wesentlichen rotationsbeweglichen Teile des Antriebsmechanismus 10, der primären Antriebseinheit 101, umfassend Federgehäuse 7, Haspel 12 und Treibrad 14, und der sekundären Antriebseinheit 102, umfassend Axialzapfen 17, Rotorscheibe 18 und Lagerbuchse 19, sind achsparallel beabstandet voneinander am Deckel 20, respektive der Basis 21 angeordnet. Da der aussenverzahnte Axialzapfen 17 in das innenverzahnte Treibrad 14 hineinragt, müssen die Achsen 4 und 8, an denen die Antriebseinheiten 101, 102 drehbeweglich gelagert sind entsprechend stabil ausgestaltet sein, um die beim kräftigen Ziehen am Schnurzug eingeleiteten Kräfte aufnehmen und weiterleiten zu können. Insbesondere der Lagerzapfen 9, der am Deckel angeordnet ist und die Haspel 12 trägt, muss stabil genug ausgebildet sein, um sicherzustellen, dass sich der Eingriff der zusammenwirkenden Verzahnungen 15, 16 von Treibrad 14 und Axialzapfen 17 beim Ziehen am Schnurzug nicht löst. Die Explosionszeichnung der beiden Antriebseinheiten 101, 102 in der **Figur 4** macht die Lage der beiden Achsen 4 und 8 und die Dimensionierung der beiden Getriebeteile, Treibrad 14 mit Innenverzahnung 15 und Axialzapfen 17 mit passender Aussenverzahnung 16, deutlich. Das erfindungsgemässe Getriebe kann auch durch andere Kraftübertragungsmittel, zum Beispiel Räder und Rollen mit Reibschluss realisiert werden.

Ein grundsätzlicher Vorteil der erfindungsgemässen Vorrichtung besteht darin, dass die Übersetzung vom Treibrad 14 zum Axialzapfen 17 ohne Drehrichtungsänderung erfolgt. Ein weiterer wesentlicher Vorteil besteht darin, dass trotz der erreichten Übersetzung die Baugrösse des Antriebsmechanismus 10 klein gehalten werden kann, so dass sich der Antriebsmechanismus 10 problemlos im Oberteil 2 unterbringen lässt. Der Verzicht auf zwei durchgehende Achsen, die exzentrische Anordnung der Antriebsachse 8 und die Verwendung des innenverzahnten Treibrades 14 ermöglichen es, die sekundäre Antriebseinheit 102 auf der Zentralachse 4 des Gerätes zu platzieren und gleichzeitig die Übersetzung durch das grössere Treibrad 14 zu erreichen ohne dass sich der im Oberteil 2 benötigte Platz seitlich vom Axialzapfen 17 um den Durchmesser des Treibrades 14 erhöht.

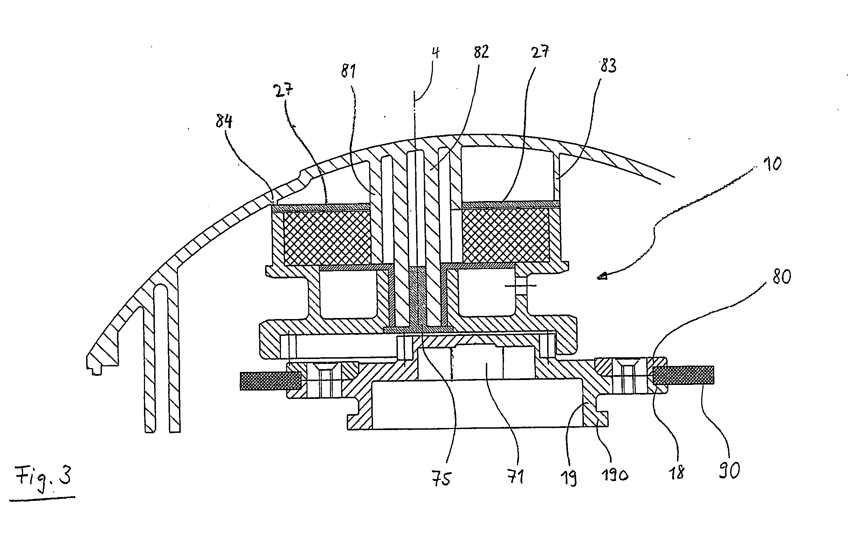

Im dargestellten Ausführungsbeispiel ist der Lagerzapfen 9 nur an einem oberen Ende an einer Deckelunterseite befestigt, und ragt frei nach unten. Der Lagerzapfen 9 ist vorzugsweise abgestuft zweiteilig aufgebaut, so dass das Federgehäuse 7 um einen dickeren äusserer Hohlzylinder 81 gelagert ist und die Haspel 12 um einen konzentrisch aus dem äusserer Hohlzylinder 81 weiter nach unten ragenden inneren Hohlzylinder 82 dreht. Eine Lagerscheibe 27 schliesst das Federgehäuse 7, in der sich die nicht im Detail gezeichnete Rückholfeder 72 befindet nach oben hin ab. Die Lagerscheibe 27 ist an ihrer Peripherie mindestens an mehreren Punkten direkt 84 oder mittels mehrerer Stützelementen 83 gegen die Innenseite des Deckels 20 abgestützt und wird so in einer waagerechten Position gehalten. Aus der **Figur 3** wird deutlich, dass die primäre Antriebseinheit 101 auf die Hohlzylinder 81, 82 aufgesteckt wird und mit einem Stöpsel 75 am Lagerzapfen 9 drehbeweglich, aber gegen eine Axialverschiebung gesichert gehalten wird.

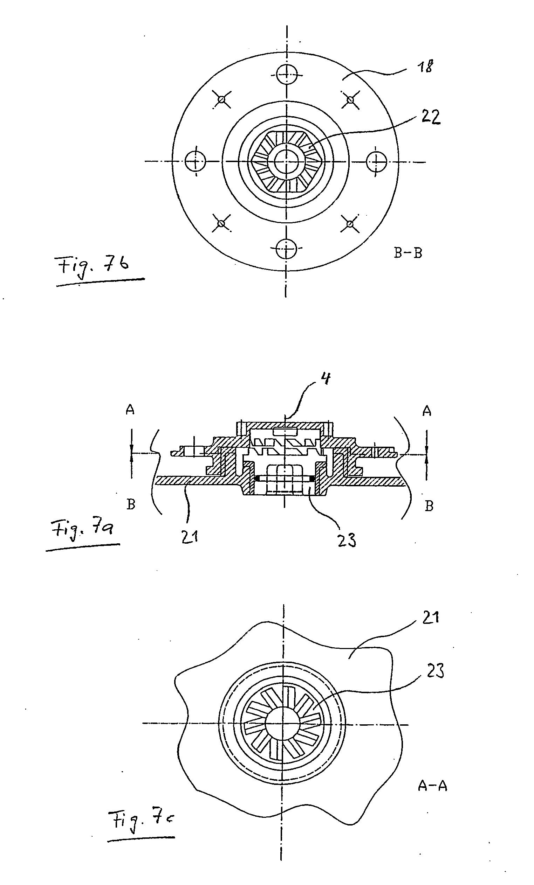

Die Funktion der Rückholfeder 72 ist in Zusammenhang mit einem Schnurzugmechanismus generell bekannt und muss nicht weiter erklärt werden. Durch Ziehen am Schnurzug wird die Haspel 12 in Drehung versetzt und die Feder 72 wird während dieser Arbeitsdrehung in Arbeitsrichtung vorgespannt, bis die Zugschnur 70, vorzugsweise nach 3 bis 6 Umdrehungen der Haspel 12 vollständig abgewickelt ist. Die Drehbewegung der Haspel 12 wird während der Arbeitsdrehung gleichsinnig auf den Axialzapfen 17 und damit auf die sekundäre Antriebseinheit 102 übertragen. Axialzapfen 17 und Rotorscheibe 18 weisen eine zentrale unterseitige Aufnahme 71 für ein oberes Kupplungsteil 22 auf. Die unten offene Aufnahme 71 ist im dargestellten Ausführungsbeispiel sechseckig ausgebildet, so dass sie das in **Figur 7a und 7b** dargestellte obere Kupplungsteil 22 drehmomentschlüssig und axial verschiebbar aufnehmen kann. In den **Figuren 1** **und** **2** befindet sich das obere Kupplungsteil 22 in einer oberen Freigabeposition, in der es mit seiner unterseitigen Verzahnung nicht in die entsprechende Verzahnung eines unteren Kupplungsteils, auch Mitnehmer 23 genannt, eingreift. Durch eine Druckfeder 74 ist der obere Kupplungsteil 22 gegen den Mitnehmer 23 vorgespannt, so dass über den Formschluss der ineinander greifenden Zähne beider Kupplungsteile während der Drehung in Arbeitsrichtung das Drehmoment des oberen Kupplungsteils 22 auf den Mitnehmer 23 übertragen werden kann. Da im dargestellten Ausführungsbeispiel für die nachgeschalteten Arbeitsmittel nur eine Drehung in Arbeitsrichtung erwünscht ist, ist die Kupplung mit einem einsinnigen Freilauf in Rückstellrichtung, also gegen die Arbeitsrichtung versehen. Die Zähne sind, wie von anderen Ratschenmechanismen bekannt, gegensinnig einseitig angeschrägt, so dass der obere Kupplungsteil 22 während der Rückholdrehung des Schnurzuges gegen die Kraft der Feder 74 in die obere Freigabeposition gedrückt werden kann und die. Schneideinheit 60 während dem Aufwickeln der Zugschnur 70 stillsteht. Beim nächsten Zug am Handgriff 11 wird der obere Kupplungsteil 22 wieder in Arbeitsrichtung gedreht und er greift wiederum in den Mitnehmer 23 ein, so dass dieser die Drehbewegung in Arbeitsrichtung fortsetzen kann. Durch die drehmomentschlüssige Verbindung, im vorliegenden Ausführungsbeispiel mittels Innen- und Aussensechskant, zwischen einer unterseitigen Aufnahmeöffnung des Mitnehmers 23 und dem oberseitigen Antriebsnocken 69 der Messerwelle 67, wird die Drehbewegung vom Axialzapfen 17 der sekundären Antriebseinheit 102 1:1 auf die Schneideinheit 60 übertragen.

Die Basis 21 des Oberteils 2 weist eine zentrale kreisrunde Öffnung auf, in der der im Wesentlichen zylindrische Mitnehmer 23 mit passendem Sitz drehbar gelagert ist. Da die Aufnahmeöffnung des Mitnehmers 23 als Blindloch ausgebildet ist und die Basis 21 ansonsten keine weiteren Öffnungen umfasst, lassen sich die Bereiche des Oberteils 2, die mit den zu bearbeitenden Lebensmitteln in Berührung kommen, sehr gut reinigen. Im peripheren Bereich ist die Basis 21 umlaufend dicht mit dem Deckel 20 verbunden, so dass vermieden wird, dass Nahrungsmittelreste oder Wasser in den Innenraum des Oberteils 2 dringen können.

Im Ausführungsbeispiel der **Figur 1** ist die Basis 21 mit einer peripheren umlaufenden Seitenwand 28 versehen, die eine Aussenkontur aufweist, die das form- und/oder kraftschlüssige Aufsetzen auf den Schneidgutbehälter 30 erlaubt. Die lichte Höhe zwischen der Unterseite des Mitnehmers 23 und dem Boden 31 des Schneidgutbehälters 30 entspricht im Wesentlichen der Höhe der Schneideinheit 60 ohne ihren oberseitigen Antriebsnocken 69. Die obere und untere Lagerung der Schneideinheit 60 ist jeweils derart formschlüssig oder geschützt ausgebildet, dass kein Schneidgut eindringen und sich festsetzen kann. An der Unterseite des Behälterbodens 31 ist, wie in **Figur 1** angedeutet, vorzugsweise eine Rutschsicherung 35 aus einem weichen Gummi oder Silikonmaterial angebracht. Die gleichmässig über den Umfang der inneren Behälterwand verteilten vertikalen Verwirbelungsrippen 34 erstrecken sich vom Boden 31 des Behälters bis annähernd auf eine Umlaufhöhe des oberen Abweiserflügels 56. Die Funktion der Verwirbelungsrippen 34 beim Schneiden oder Schälen von Gemüse oder Obst ist bekannt und muss hier nicht weiter erläutert werden.

Die Schneideinheit 60 der in **Figur 1** dargestellten Ausführungsform umfasst radial zueinander verschwenkbare Messer 61, 62, 63, respektive Klingen 611, 621, 631, wie sie in der CH-Patentanmeldung 00730/06 ausführlich offenbart sind. Die entsprechenden Geräte sind vorzugsweise Geräte zum Schneiden von Gemüse, Kräutern und/oder Obst, wobei sie mindestens zwei radial an einer gemeinsamen Messerachse 64 angeordnete Klingen 611, 621 umfassen, von denen mindesten eine relativ zur anderen um einen begrenzten Zeg radial um die Messerachse 64 aus einer Ruheposition in eine Arbeitsposition schwenkbar ist. Diese Schwenkbeweglichkeit der Klingen 621, 631 erlaubt es einerseits, die vorzugsweise axial übereinander und beabstandet voneinander angeordneten Klingen 611, 621, 631 zum Befüllen des Schneidgutbehälters 30 in eine gemeinsame radiale Ruheposition zu bringen, so dass nahezu das gesamte Behältervolumen frei und befüllbar ist. Andererseits wird durch die Schwenkbeweglichkeit der Klingen 621, 631 an der Messerachse 64 in der Startphase der initiale Kraftaufwand erheblich reduziert, da nicht alle Klingen 611, 621, 631 gleichzeitig anschneiden müssen.

Das Grundprinzip des neuen Antriebs lässt sich vom Fachmann auf eine Vielzahl von weiteren Geräten übertragen, ohne dabei vom Grundgedanken der Erfindung abzuweichen. Es lassen sich nicht nur Geräte mit einer fixen und einer oder mehrerer schwenkbeweglich an einer Messerachse angeordneten Klingen herstellen, bei denen die Klingen vorzugsweise alle in axialer Richtung voneinander beabstandet sind, sondern es lassen sich in weiteren bevorzugten Ausführungsformen auch mehr als eine Klinge an einem Klingenhalter anordnen, wobei diese wiederum in derselben Winkelposition oder versetzt zueinander am selben Klingenhalter positioniert sein können. Die Geometrie der Klingen und deren Anstellwinkel am Klingenhalter wird ebenfalls variiert und für den jeweiligen Verwendungszweck optimiert. Da sich die Schneideinheit 60 der erfindungsgemässen Geräte sehr einfach wechseln lässt, hat es sich als vorteilhaft erwiesen, verschiedene Schneid- oder Arbeitseinheiten anzubieten. Neben den bereits beschriebenen Schneideinheiten 60 zum Schneiden von Gemüse und Obst werden solche zum Schneiden von Kräutern mit sehr schmalen dünnen Klingen und solche zum Hacken von Eis mit stabilen Klingen und gezahnter Schneide angeboten.

Ausser den Klingen sind vorzugsweise alle Bauteile des Gerätes, die mit den zu bearbeitenden Nahrungsmitteln in Kontakt kommen, und auch die wesentlichen Teile des Antriebsmechanismus aus Kunststoffen wie SAN, POM und ABS im Spritzguss gefertigt. Insbesondere die Anteile, die mit den zu bearbeitenden Lebensmittel in Kontakt kommen sind dabei lebensmittelzulässig.

Bei bevorzugten Ausführungsformen der Geräte 1 gemäss der vorliegenden Erfindung beträgt der Durchmesser des Schneidgutbehälters 30 zwischen 120 und 140 mm bei einer Höhe von 70 bis 90 mm. Da sich die Arbeitsmittel der bevorzugten Ausführungsformen gemäss der vorliegenden Erfindung zum Befüllen platzsparend in eine gemeinsame Ruhestellung anordnen lassen und der knapp über dem Boden angeordnete untere Abweiser 50 kaum Platz wegnimmt, wird der nutzbare freie Innenraum des Schneidgutbehälters 30 nur noch durch die zentrale Messerwelle 67 beschränkt. Schon bei den kleineren manuell betriebenen Geräten lassen sich daher ganze Zwiebeln, Kohlrabi oder Fenchelknollen einfüllen. Die Tatsache, dass sich dieses grosse Schneidgut auch problemlos durch nur wenige Züge an der Schnurzug tatsächlich verarbeiten lässt, stellt einen weiteren wesentlichen Vorteil der vorliegenden Erfindung dar. Die schwenkbewegliche Lagerung von mindestens einer Schneidklinge 62, 63 führt nämlich dazu, dass der Kraftaufwand beim Beginn einer jeden Schneidbewegung, das heisst beim Beginn der Zugbewegung, erheblich reduziert wird. Wird die Schneideinheit 60 nach dem Befüllen des Schneidgutbehälters 30 erstmals durch Ziehen am Handgriff 11 angetrieben, so schneidet die untere, fix am Klingenhalter 612 und der Messerwelle 67 angeordnete Klinge 611 sobald sie auf das erste Schneidgut trifft. Die in einer höheren Ebene schwenkbar gelagerte zweite Klinge 621 trifft ebenfalls auf das zu schneidende Gut, wird aber durch die Trägheit des Schneidgutes relativ zur Messerwelle 67 aus ihrer Ruheposition bis in die Arbeitsposition verschwenkt. Gegenüber dem Schneidgutbehälter 30 ändert die zweite Klinge 621 in dieser Phase ihre Lage nicht, und beginnt sich erst zu drehen, sobald die Arbeitsposition erreicht ist, das heisst, sobald die erste fixe Klinge 611 eine 120° Umdrehung im Schneidgutbehälter 30 zurückgelegt hat. Sobald die Arbeitsposition erreicht ist, verhindern Anschlagmittel ein weiteres Verschwenken des beweglichen Messers 62 und die Klinge 621 wird ruckartig in Bewegung versetzt und zerschneidet das anliegende Schneidgut, wiederum unterstützt durch dessen Trägheit. Analog schneidet die zweite bewegliche Klinge 631 erst, wenn sie nach einem Schwenk um 240° ihre Schneidposition erreicht. Durch die verschwenkbare Lagerung der zweiten Klinge 621 und der dritten Klinge 631 an der Messerwelle 67 wird in der Startphase, das heisst beim erstmaligen Ziehen an der Zugschnur 70, der initiale Kraftaufwand erheblich reduziert, da nicht alle Klingen 611, 621, 631 gleichzeitig anschneiden müssen. Die vorliegende Erfindung wird daher vorzugsweise mit einer oben beschriebenen Schneideinheit 60 eingesetzt, da beide synergistisch zusammenwirken, sie ist jedoch nicht auf diese beschränkt.

Zum Schälen von Zwiebeln und/oder Knoblauch werden zum Beispiel an Stelle der Klingen, fingerförmige Arbeitsmittel eingesetzt, wie sie von gattungsgleichen Geräten bekannt sind. Zum Verarbeiten von weichem oder vorgekochtem Gemüse und/oder Obst, insbesondere zur Zubereitung von Kleinkinder- und Säuglingsnahrung, werden Arbeitsmittel zum Schneiden und zum Quetschen in einer Einheit miteinander kombiniert.

Durch weitere Einsätze, die anstelle der Schneideinheit 60 im Unterteil 3 angeordnet und mittels des Antriebsmechanismus 10 in Drehung versetzt werden können, zum Beispiel durch einen Korb zum Schleudern von Kräutern, einen S-förmigen Mischarm oder einen Quirl zum Aufschäumen von Milch, lassen sich die erfindungsgemässen Geräte polyvalent in Küche und Haushalt einsetzen.

Auch der Schneidgutbehälter 30, der in den bisher beschriebenen Ausführungsformen als im Wesentlichen drehrund und sich im Durchmesser leicht nach unten verjüngend dargestellt wurde, lässt sich einfach auswechseln und an den jeweiligen Einsatzzweck anpassen. Durch einen separaten Deckel lässt sich ein Schneidgutbehälter 30 mit dem fertig bearbeiteten Gut verschliessen und aufbewahren. Die Schneideinheit 60 oder ein anderer Arbeitseinsatz wird dazu entfernt. Mit einem zweiten Schneidgutbehälter 30 ist das erfindungsgemässe Gerät wieder einsatzbereit.

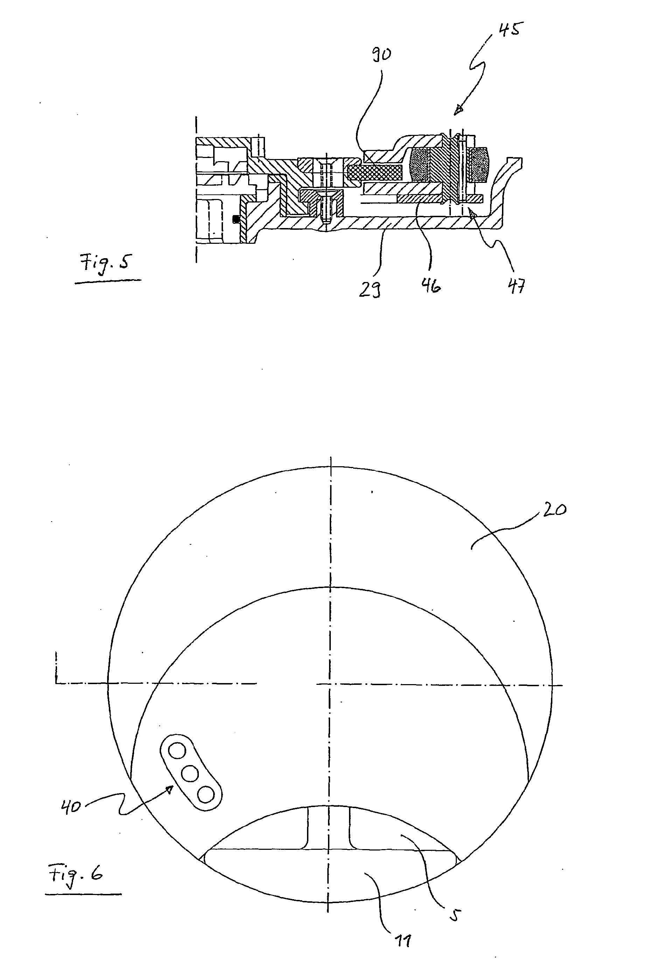

In einer bevorzugten Ausführungsform der vorliegenden Erfindung wird mit jedem Zug an der Zugschnur 70 nicht nur ein Arbeitsmittel mechanisch angetrieben, sondern es wird zusätzlich noch Strom erzeugt. In den **Figuren 1 bis 4** ist dargestellt und oben wurde bereits beschrieben, dass unterhalb des Axialzapfens 17 koaxial eine Rotorscheibe 18 angeordnet ist. Die Rotorscheibe 18, die im Durchmesser wesentlich grösser als der Axialzapfen 17 ist, trägt einen peripheren Magnetring 90, der wie in der **Figur 5** im Ausschnitt dargestellt ist, einen Generator 45 berührungsfrei antreibt. Der Generator 45 versorgt eine Elektronikeinheit 47 mit Strom. Die Elektronikeinheit 47 mitsamt Generator 45 ist vorzugsweise auf einer Grundplatine 46 angeordnet, die am Boden 29 der Basis 21 schnell und einfach montierbar ist. Ebenfalls auf der Grundplatine 46 angeordnet sind vorzugsweise drei Leuchtmittel besonders bevorzugt in Form von LEDs, die über, nicht in der Figur dargestellte, Lichtleiter mit der Anzeigeeinheit 40 in Wirkverbindung stehen. Die Verwendung der Lichtleiter erlaubt es die LEDs direkt auf der Grundplatine 46 statt in der Anzeigeeinheit 40 im Deckel 20 zu platzieren, was die Herstellungskosten erheblich senkt. Elektrische Leitungen vom Generator 45 zur Anzeigeeinheit 40 im Deckel 20 entfallen.

Elektronikeinheit 47 und Anzeigeeinheit 40 sind Bestandteile eines Schneidgradindikators, der es auch für ungeübte Benutzer einfach macht, Schneidgut mit einem idealen Schneidgrad zu erhalten. Die Anzeigeeinheit 40 ist für den Benutzer gut sichtbar, wie es zum Beispiel in der **Figur 6** dargestellt ist, im Deckel 20 angeordnet. Vorzugsweise ist der Schneidgradindikator, insbesondere seine Anzeigeeinheit 40 sehr einfach aufgebaut und ohne weitere Anleitung für den Benutzer intuitiv verständlich. Im Ausführungsbeispiel der **Figur 6** ist demgemäss eine Anzeigeeinheit 40 gespeist von drei Leuchtdioden (LED) für den Benutzer gut sichtbar im Deckel 20 eingelassen. Die drei LED sind zum Beispiel mit den Farben grün, gelb und rot ausgewählt und sind in Reihe nebeneinander angeordnet. Um die Anzahl der Umdrehungen der Arbeitseinheit, zum Beispiel der Schneideinheit 60 und damit der Klingen 611, 621 und 631 zu erfassen, wird vorzugsweise die Anzahl der Umdrehungen der Rotorscheibe 18 von der Elektronik erfasst und zwischengespeichert. Sobald der zwischengespeicherte Wert über einem vorgegebenen Wert (von zum Beispiel 5 Umdrehungen) liegt, leuchtet oder blinkt die grüne LED der Anzeige auf. Dadurch wird dem Benutzer signalisiert, dass das Schneidgut zwar schon gleichmässig zerkleinert, aber noch recht grob ist. Durch weitere Züge am Schnurzug wird die Schneideinheit 60 weiter gedreht und nach Überschreiten einer weiteren vorbestimmten Anzahl von Umdrehungen wechselt die Anzeige auf gelb und signalisiert dem Benutzer, dass das Schneidgut nun fein geschnitten vorliegt und nach einer bestimmten Anzahl weiterer Züge wechselt die Anzeige in den roten Bereich. Der Benutzer bekommt damit die Information, dass das Schneidgut nun sehr fein zerkleinert vorliegt und ein weiteres Bearbeiten nur noch fein püriertes Schneidgut ergibt. Gemäss einer bevorzugten Ausführungsform wechselt die Anzeige jeweils nach einer geradzahligen Anzahl von Schnurzügen (über die volle Länge der Zugschnur 70).

Nach Erreichen des gewünschten Feinheitsgrades stoppt der Benutzer und die Zugschnur 70 wird durch die vorgespannte Rückholfeder 72 aufgewickelt, bis der Handgriff 11 in der am Deckel 20 vorgesehenen Ruheposition zu liegen kommt. Das Oberteil 2 kann vom Schneidgutbehälter 60 abgenommen werden und das fertig bearbeitete Material entleert oder im Behälter gelagert werden.

Bei ausführlichen Versuchen hat es sich zum Erreichen eines homogenen Schneidergebnisses als äusserst vorteilhaft erwiesen, unter- und/oder oberhalb der Klingen 611, 621, 631 Abweiser 50, 51 anzubringen, die bewirken, dass das Schneidgut immer wieder in den Bereich der Messerklingen geschleudert wird.

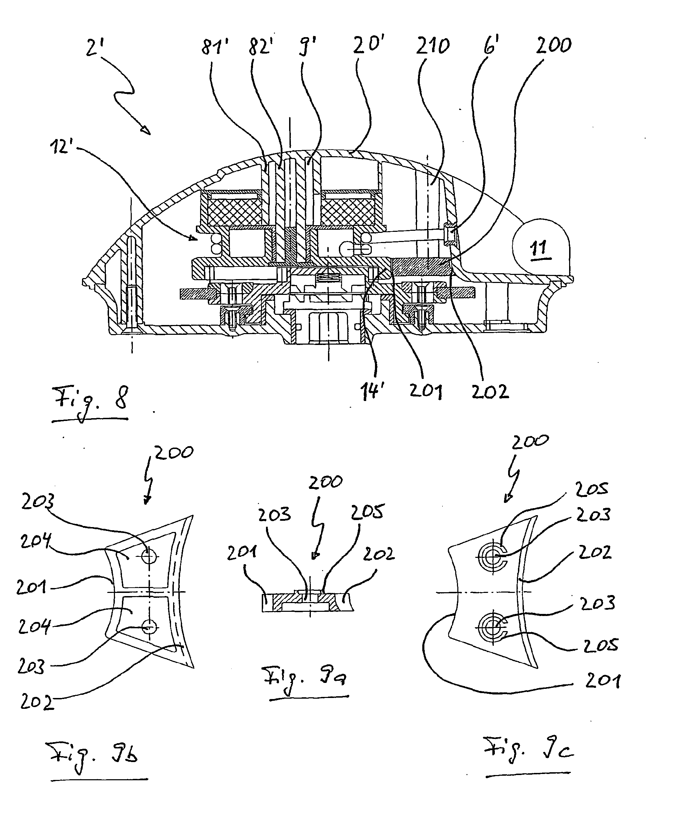

**Figur 8** zeigt in einem Schnitt eine weitere Ausführungsform eines Oberteils 2', welches ein zusätzliches Stützelement 200 aufweist. Dieses Stützelement 200 verhindert eine Auslenkung des Lagerzapfens 9', sowie des inneren und äusseren Hohlzylinders 82', 81' wenn via Handgriff 11' und Haspel 12' eine seitliche Kraft auf die primäre Antriebseinheit 101' und somit auf das Hohlrad/Treibrad 14' eingeleitet wird. Das Stützelement wird so positioniert, dass es in etwa radial vom Hohlrad/Treibrad 14' in Richtung zur Durchführöffnung 6' absteht und somit in etwa parallel zur Schnur zwischen Haspel 12' und Durchführöffnung 6' verläuft. Das Stützelement 200 wird an einem oder mehreren Montageelementen 210 mit einem oder mehreren Haltemittel im Oberteil 2' befestigt. Das Montageelement 210 ist vorzugsweise am Deckel 20' angeformt. Das Haltemittel ist vorzugsweise eine Schraube, alternativ kann das Stützelement 200 mittels Befestigungsmethoden wie beispielsweise Kleben, Schweissen oder Verrasten fixiert sein. Das Stützelement 200 ist vorzugsweise so ausgestaltet, dass es auf der einen Seite mit einer Gleitfläche 201 das Hohlrad/Treibrad 14' abstützt und mit diesem ein Gleitlager bildet. Die andere Seite des Stützelementes 200 kann mit einem Abstützrand 202, welcher vorzugsweise entsprechend der Kontur des Deckels 20' geformt ist, am Deckel 20' anliegen und bildet zusätzlich zum Montageelement 210 ein weiteres Widerlager für das Stützelement 200.

In den **Figuren 9a bis 9c** ist das Stützelement 200 gemäss der Ausführungsform in Figur 8 im Detail gezeigt. Das Stützelement 200 kann durch die beiden Befestigungslöcher 203 an den entsprechenden Montageelementen 210 beispielsweise mittels Schrauben befestigt werden. Es ist aber auch denkbar, dass eine andere Anzahl Befestigungslöcher 203 ausgebildet sind und/oder dass alternative Befestigungsmethoden zum Einsatz kommen. Auf der Unterseite des Stützelementes 200 sind optional Vertiefungen 204 vorgesehen, welche einerseits eine Reduktion des benötigten Materials erlauben und andererseits mit zwischen den Vertiefungen 204 ausgestalteten Rippen eine strukturelle Verstärkung des Stützelementes 200 bewirken. Die dem Hohlrad/Treibrad 14' zugewandte Seite des Stützelementes 200, die so genannte Gleitfläche 201, weist vorzugsweise den selben Radius auf wie das Hohlrad/Treibrad 14' selber. Alternativ ist die Gleitfläche 201 in mindestens zwei einzelne Segmente unterteilt, so dass das Hohlrad/Treibrad 14' nur auf einzelnen Punkten oder Gleitflächensektionen am Stützelement 200 aufliegt. Für die Herstellung des Stützelementes 200 wird vorzugsweise ein Material verwendet, welches einen geringen Reibungskoeffizienten aufweist, beispielsweise kommt eine Fluorpolymer wie PTFE zum Einsatz. Alternativ kann ein mehrteiliges Stützelement 200 zum Einsatz kommen, bei dem nur die Gleitfläche 201 aus einem Material mit geringem Reibungskoeffizienten besteht, oder das Stützelement kann mit einer Beschichtung versehen werden. Die der Gleitfläche 201 gegenüberliegende Seite des Stützelementes 200, der Abstützrand 202 ist vorzugsweise so ausgestaltet, dass er flächig am Deckel 20' aufliegt und der Deckelkontur entspricht. In einer weiteren Ausführungsform kann zur vereinfachten Montage das Stützelement 200 Positionierhilfen 205 aufweisen, welche mit entsprechenden Positionieraufnahmen des Montageelementes 210 passen.

### Liste der Bezugszeichen

- 1: Gerät
- 2, 2': Oberteil
- 3: Unterteil
- 4: Zentralachse
- 5: Aussparung für Handgriff
- 6, 6': Durchführöffnung
- 7: Federgehäuse
- 8: Antriebsachse
- 9, 9': Lagerzapfen
- 10: Antriebsmechanismus
- 101, 101': primäre Antriebseinheit
- 102: sekundäre Antriebseinheit
- 11, 11': Handgriff
- 12, 12': Haspel/Schnurrolle
- 14, 14': Hohlrad/Treibrad
- 15: Innenverzahnung
- 16: Aussenverzahnung
- 17: Axialzapfen
- 18: Rotorscheibe
- 19: Lagerbuchse
- 20, 20': Deckel
- 21: Basis
- 22: oberes Kupplungsteil
- 23: Mitnehmer
- 27: Lagerscheibe
- 28: Seitenwand Basis
- 29: Boden Basis
- 30: Schneidgutbehälter
- 31: Boden
- 32: Seitenwand
- 33: Lagerzapfen
- 34: Verwirbelungsrippe
- 35: Rutschsicherung
- 40: Anzeigeeinheit
- 45: Generator
- 46: Grundplatine
- 47: Elektronikeinheit
- 50: unterer Abweiser
- 51: oberer Abweiser
- 56: Abweiserflügel
- 60: Schneideinheit
- 61: erstes Messer
- 611: erste Klinge
- 612: erster Klingenhalter
- 62: zweites Messer, erstes bewegliches Messer
- 621: zweite Klinge
- 622: zweiter Klingenhalter
- 63: drittes Messer
- 631: dritte Klinge
- 632: dritter Klingenhalter
- 64: Messerachse
- 67: Messerwelle
- 69: Antriebsnocken
- 70: Zugschnur
- 71: Aufnahme
- 72: Rückholfeder
- 74: Druckfeder
- 75: Stöpsel
- 80: Spannring
- 81, 81': äusserer Hohlzylinder
- 82, 82': innerer Hohlzylinder
- 83: Stützelemente
- 84: Abstützung
- 90: Magnetring
- 190: Flansch
- 191: Achszylinder
- 192: Niederhalter
- 193: Lagerhülse
- 200: Stützelement
- 201: Gleitfläche
- 202: Abstützrand
- 203: Befestigungsloch
- 204: Vertiefung
- 205: Positionierhilfe
- 210: Montageelement

## Patentansprüche

1. Gerät (1) zum Bearbeiten von Lebensmitteln mit einem Oberteil (2), einem Antriebsmechanismus (10) und einem Unterteil (3) mit Arbeitsbehälter (30) und einer mittels dem Antriebsmechanismus (10) manuell antreibbaren und in eine Drehbewegung versetzbaren Arbeitseinheit (60), wobei der Antriebsmechanismus (10) einen Schnurzugantrieb umfasst und der Antriebsmechanismus (10) und die Arbeitseinheit (60) über eine lösbare drehmomentschlüssige Verbindung in Wirkverbindung stehen, **dadurch gekennzeichnet, dass** der Antriebsmechanismus (10) eine primäre und eine sekundäre Antriebseinheit (101, 102) umfasst, die über ein Getriebe derart in Wirkverbindung stehen, dass ein Übersetzungsverhältnis von 1:1.5 bis 1:4, vorzugsweise zwischen 1:1.8 bis 1:1.9 erreicht wird.

2. Gerät (1) nach Anspruch 1, **dadurch gekennzeichnet, dass** die primäre und die sekundäre Antriebseinheit (101, 102) achsparallel zueinander angeordnet sind.

3. Gerät (1) nach Anspruch 1 oder 2, **dadurch gekennzeichnet, dass** die sekundäre Antriebseinheit (102) koaxial zur einer Zentralachse (4) des Gerätes (1) und eine Antriebsachse (8) der primären Antriebseinheit (101) exzentrisch dazu angeordnet ist.

4. Gerät (1) nach einem der Ansprüche 1 bis 3, **dadurch gekennzeichnet, dass** die zumindest eine der Antriebseinheiten die Achse (4, 8) der jeweils anderen Antriebseinheit schneidet.

5. Gerät (1) nach einem der vorhergehenden Ansprüche, **dadurch gekennzeichnet, dass** die primären Antriebseinheit (101) koaxial angeordnet Federgehäuse (7), Haspel (12) und Treibrad (14) umfasst und dass die sekundäre Antriebseinheit (102) koaxial angeordnet Axialzapfen (17), Rotorscheibe (18) und Lagerbuchse (19) umfasst.

6. Gerät (1) nach Anspruch 5, **dadurch gekennzeichnet, dass** die primäre Antriebseinheit (101) über eine Innenverzahnung (15) des Treibrads (14) mit einer Aussenverzahnung (16) des Axialzapfens (17) der sekundären Antriebseinheit (102) in Wirkverbindung steht.

7. Gerät (1) nach einem der vorhergehenden Ansprüche, **dadurch gekennzeichnet, dass** ein an einer Deckelunterseite frei nach unten ragender Lagerzapfen (9) die primäre Antriebseinheit (101) trägt.

8. Gerät (1) nach Anspruch 6, **dadurch gekennzeichnet, dass** die primäre Antriebseinheit (101) annähernd waagerecht im Oberteil (2) angeordnet ist und gegen die Deckelinnenwand in dieser Stellung abgestützt ist.

9. Gerät (1) nach einem der vorhergehenden Ansprüche 5 bis 8, **dadurch gekennzeichnet, dass** Axialzapfen (17) und Rotorscheibe (18) eine zentrale unterseitige, sechseckige Aufnahme (71) für die drehmomentschlüssige Aufnahme eines axial verschiebbaren oberen Kupplungsteils (22) aufweisen, der aus einer oberen Freilaufposition in eine untere drehmomentschlüssige Eingriffposition mit einem unteren Mitnehmer (23) zur Übertragung der Drehbewegung des Antriebsmechanismus (10) auf die Arbeitseinheit (60) bringbar ist.

10. Gerät (1) nach einem der vorhergehenden Ansprüche, **dadurch gekennzeichnet, dass** der Arbeitsbehälter (30) ein im Wesentlichen rotationssymmetrisches Gefäss zur Aufnahme von zu bearbeitendem Gut ist, in dem die Arbeitseinheit (60) im Wesentlichen koaxial drehbar gelagert ist, wobei die Arbeitsmittel vorzugsweise radial zur Zentralachse (4) angeordnet sind.

11. Gerät (1) nach einem der vorhergehenden Ansprüche, **dadurch gekennzeichnet, dass** ein Stützelement (200) die primäre Antriebseinheit (101') abstützt und die durch den Handgriff 11' und die Haspel 12' auf den Lagerzapfen 9' eingeleitete Auslenkkraft aufnimmt.

## Claims

1. A device (1) for processing foodstuffs, comprising a top part (2), a drive mechanism (10) and a bottom part (3) with a processing container (30) and a processing unit (60), which can be manually operated by means of the drive mechanism (10) and put into a rotating movement, wherein the drive mechanism (10) comprises a cord pull drive, and the drive mechanism (10) and the processing unit (60) are in operative connection via a releasable torque-proof connection, **characterized in that** the drive mechanism (10) is comprised of a primary and a secondary drive unit (101, 102), which are in operative connection by means of a gear in such a way that a gear ratio of 1:1.5 to 1:4, preferably between 1:1.8 to 1:1.9, is achieved.

2. The device (1) in accordance with claim 1, **characterized in that** the primary and secondary drive units (101, 102) are arranged axis-parallel to each other.

3. The device (1) in accordance with claim 1 or 2, **characterized in that** the secondary drive unit (102) is arranged coaxially in relation to a central shaft (4) of the device (1), and a driveshaft (8) of the primary drive unit (101) is arranged eccentrically thereto.

4. The device (1) in accordance with one of claims 1 to 3, **characterized in that** at least one of the drive units intersects the axis (4, 8) of the respectively other drive unit.

5. The device (1) in accordance with one of the preceding claims, **characterized in that** the primary drive unit (101) comprises a coaxially arranged spring housing (7), a winder (12) and a drive wheel (14), and that the secondary drive unit (102) comprises a coaxially arranged axial journal (17), a rotor disk (18) and a bearing bushing (19).

6. The device (1) in accordance with claim 5, **characterized in that**, via the internal tooth arrangement (15) of the drive wheel (14), the primary drive unit (101) is in operative connection with external teeth (16) of the axial journal (17) of the secondary drive unit (102).

7. The device (1) in accordance with one of the preceding claims, **characterized in that** a bearing journal (9), which projects freely downward from a cover underside, supports the primary drive unit (101).

8. The device (1) in accordance with claim 6, **characterized in that** the primary drive unit (101) is arranged approximately horizontally in the upper part (2) and in this position is supported against the inner cover wall.

9. The device (1) in accordance with one of the preceding claims 5 to 8, **characterized in that** the axial journal (17) and the rotor shaft (18) have a central, hexagonal receptacle (71) on the underside for the torque-proof connection reception of an axially displaceable upper coupling element (22), which can be brought from an upper freewheeling position into a lower torque-connected engagement position with a lower engagement member (23) for transmitting the rotary movement of the drive mechanism (10) to the processing unit (60).

10. The device (1) in accordance with one of the preceding claims, **characterized in that** processing container (30) is a substantially rotation-symmetrical vessel for receiving material to be processed, in which the drive unit (60) is seated substantially coaxially rotatable, wherein the processing means are preferably arranged radially in respect to the central axis (4).

11. The device (1) in accordance with one of the preceding claims, **characterized in that** a support element (200) supports the primary drive unit (101') and absorbs the deflection force introduced to the bearing journal (9') by the handle (11') and the winder (12').

## Revendications

1. Appareil (1) pour traiter des aliments, comprenant une partie supérieure (2), un mécanisme d'entraînement (10) et une partie inférieure (3) avec un récipient de travail (30) et une unité de travail (60) pouvant être entraînée manuellement au moyen du mécanisme d'entraînement (10) et pouvant être mise en rotation, le mécanisme d'entraînement (10) comprenant un entraînement de traction à cordon et le mécanisme d'entraînement (10) et l'unité de travail (60) étant en liaison fonctionnelle par le biais d'une connexion par accouplement dynamométrique desserrable, **caractérisé en ce que** le mécanisme d'entraînement (10) comprend une unité d'entraînement primaire et une unité d'entraînement secondaire (101, 102), qui sont en liaison fonctionnelle par le biais d'une transmission de telle sorte qu'un rapport de transmission de 1:1,5 à 1:4, de préférence compris entre 1:1,8 et 1:1,9 soit obtenu.

2. Appareil (1) selon la revendication 1, **caractérisé en ce que** l'unité d'entraînement primaire et l'unité d'entraînement secondaire (101, 102) sont disposées l'une par rapport à l'autre avec leurs axes parallèles.

3. Appareil (1) selon la revendication 1 ou 2, **caractérisé en ce que** l'unité d'entraînement secondaire (102) est disposée coaxialement à un axe central (4) de l'appareil (1) et un axe d'entraînement (8) de l'unité d'entraînement primaire (101) est disposé de manière excentrée par rapport à lui.

4. Appareil (1) selon l'une quelconque des revendications 1 à 3, **caractérisé en ce que** l'au moins une des unités d'entraînement coupe l'axe (4, 8) de l'autre unité d'entraînement respective.

5. Appareil (1) selon l'une quelconque des revendications précédentes, **caractérisé en ce que** l'unité d'entraînement primaire (101) comprend un boîtier de ressort (7), un treuil (12) et une roue d'entraînement (14) disposés coaxialement, et **en ce que** l'unité d'entraînement secondaire (102) comprend un tourillon axial (17), un disque de rotor (18) et une douille de palier (19) disposés coaxialement.

6. Appareil (1) selon la revendication 5, **caractérisé en ce que** l'unité d'entraînement primaire (101) est en liaison fonctionnelle avec une denture extérieure (16) du tourillon axial (17) de l'unité d'entraînement secondaire (102) par le biais d'une denture intérieure (15) de la roue d'entraînement (14).

7. Appareil (1) selon l'une quelconque des revendications précédentes, **caractérisé en ce qu'**un tourillon de palier (9) saillant librement vers le bas au niveau d'un côté inférieur de couvercle porte l'unité d'entraînement primaire (101).

8. Appareil (1) selon la revendication 6, **caractérisé en ce que** l'unité d'entraînement primaire (101) est disposée approximativement horizontalement dans la partie supérieure (2) et est supportée contre la paroi interne de couvercle dans cette position.

9. Appareil (1) selon l'une quelconque des revendications 5 à 8, **caractérisé en ce que** le tourillon axial (17) et le disque de rotor (18) présentent un logement central du côté inférieur, de forme hexagonale (71), pour la réception par accouplement dynamométrique d'une partie d'accouplement (22) supérieure déplaçable axialement, qui peut être amenée depuis une position supérieure de roue libre dans une position inférieure d'engagement par accouplement dynamométrique avec un dispositif d'entraînement inférieur (23) pour le transfert du mouvement de rotation du mécanisme d'entraînement (10) à l'unité de travail (60).

10. Appareil (1) selon l'une quelconque des revendications précédentes, **caractérisé en ce que** le récipient de travail (30) est un récipient essentiellement à symétrie de révolution pour recevoir un produit à traiter, dans lequel l'unité d'entraînement (60) est montée de manière à pouvoir tourner essentiellement coaxialement, les moyens de travail étant disposés de préférence radialement par rapport à l'axe central (4).

11. Appareil (1) selon l'une quelconque des revendications précédentes, **caractérisé en ce qu'**un élément de support (200) supporte l'unité d'entraînement primaire (101 ') et reçoit la force de déviation introduite par la poignée 11' et le treuil 12' sur le tourillon de palier 9'.
